# EUROPÄISCHE PATENTSCHRIFT

(11) **EP 3 460 009 B1**
(45) Veröffentlichungstag und Bekanntmachung des Hinweises auf die Patenterteilung: **15.07.2026**
(21) Anmeldenummer: 18170122.8
(22) Anmeldetag: 30.04.2018
(51) Int. Cl.: C09D 5/02, C09D 7/61

(54) **LAGERSTABILE BESCHICHTUNGSZUSAMMENSETZUNG**
STORAGE-STABLE COATING COMPOSITION
COMPOSITION DE REVÊTEMENT STABLE AU STOCKAGE

(30) Priorität: 26.09.2017 DE 102017008986
(43) Veröffentlichungstag der Anmeldung: 27.03.2019
(73) Patentinhaber: STO SE & Co. KGaA, 79780 Stühlingen (DE)
(72) Erfinder: Van Leeuwen, Jack, 4800 Zofingen (CH); Bartmann, Kerstin, 79848 Bonndorf (DE); Troll, Michael, 79848 Bonndorf-Dillendorf (DE); Burgeth, Gerald, 91322 Gräfenberg (DE)
(74) Vertreter: Gottschalk, Matthias

(56) Entgegenhaltungen:
- EP-A1- 1 290 943
- WO-A1-2017/148572
- DE-U1- 202014 010 914
- DE-U1- 202017 104 644
- GB-A- 674 131
- DATABASE WPI Week 201501, Derwent World Patents Index; AN 2014-W66178, XP002782824
- DATABASE WPI Week 201633, Derwent World Patents Index; AN 2016-05564P, XP002782825

## Beschreibung

Die Erfindung betrifft lagerstabile Zusammensetzungen zur Ausbildung von Beschichtungen an Bauwerken und dgl., umfassend wenigstens ein organisches Bindemittel, wenigstens einen Füllstoff und/oder Pigment, Wasser zur Einstellung einer pastösen Konsistenz der Zusammensetzung, ein Puffersystem auf Basis Wasserglas oder auf Basis Siliconat sowie ggf. übliche Additive. Weiterhin betrifft die Erfindung die Verwendung von Alkalicarbonat und Erdalkalihydroxid zur Erhöhung des pH-Werts in solchen Zusammensetzungen.

Zusammensetzungen zur Ausbildung von Beschichtungen an Bauwerken müssen zwischen ihrer Herstellung und ihrer Verwendung oft lange Lagerzeiten von Wochen oder Monaten überdauern, während derer sie sich nicht relevant verändern dürfen. Wegen des Gehalts an organischen Bindemitteln in wässrigem Medium besteht die Gefahr, dass die Zusammensetzungen von Mikroben befallen werden, die sich von dem Bindemittel und anderen organischen Zusätzen ernähren. Das kann zur Unbrauchbarkeit der befallenen Zusammensetzung führen und muss daher wirksam verhindert werden.

Es ist daher bereits bekannt, solche Zusammensetzungen zu konservieren und gegen mikrobiellen Befall zu schützen.

Dabei kommt der Einsatz herkömmlicher Konservierungsstoffe generell nicht in Betracht, weil diese zunehmend rechtlichen Einschränkungen unterliegen.

Es ist daher bereits vorgeschlagen worden, lagerstabile Zusammensetzungen der hier betrachteten Art ohne Gehalt an herkömmlichen Konservierungsstoffen zu schaffen, indem der pH-Wert der Zusammensetzung so erhöht wird, dass der mikrobielle Befall wirksam verhindert wird. Angestrebt wird dabei ein pH-Wert von wenigstens 10, da bei niedrigeren pH-Werten der mikrobielle Befall nicht mit ausreichender Sicherheit verhindert werden kann.

So erfolgt im Stand der Technik die pH-Wert-Erhöhung durch Zugabe von Wasserglas, zum Beispiel gemäß EP1297079 A1 oder EP 2905268 A1, deren Offenbarungen hiermit durch Bezugnahme in diese Beschreibung aufgenommen werden. Weitere Wasserglas enthaltende Beschichtungszusammensetzungen gehen aus der CN 104 073 153 A, der CN 105 236 918 A und der GB 674 131 A hervor.

Alternativ offenbaren die DE102014013455 A1 und die WO2017144694 A1, deren Offenbarungen hiermit durch Bezugnahme in diese Beschreibung aufgenommen werden, die Verwendung von Siliconaten als pH-Wert erhöhendes Additiv.

Es ist keine triviale Aufgabe, ein funktionsfähiges und wirtschaftlich brauchbares System zur Erhöhung des pH-Werts in solchen Zusammensetzungen zu finden.

Die Erhöhung des pH-Werts beispielsweise durch Zugabe von Lauge wie NaOH oder KOH genügt nicht. Der pH-Wert fällt dann innerhalb weniger Tage oder Wochen wieder, so dass der Befallsschutz nachlässt. Man benötigt einen Puffer mit ausreichender Pufferkapazität. Wasserglas ist aufgrund seiner -O-Si(OH)ₓ - Gruppen, x = 1 - 3, ein geeigneter Puffer mit großer Pufferkapazität im hochalkalischen Bereich. Ähnliches gilt für das Siliconat - System.

Es besteht ein Bedürfnis für verbesserte Systeme zur ausreichenden und dauerhaften Erhöhung des pH-Wertes bei erfindungsgemäßen Zusammensetzungen.

Solche Systeme müssen ausreichend hohe pH-Werte in den Zusammensetzungen über ausreichende Zeiträume bereitstellen. Sie müssen mit den weiteren Bestandteilen der Zusammensetzungen kompatibel sein und dürfen deren Brauchbarkeit nicht beeinträchtigen. Sie müssen den gesetzlichen Vorschriften entsprechen und sollen möglichst einfach und kostengünstig beschaffbar und einsetzbar sein.

Zur Lösung dieser Aufgaben dienen erfindungsgemäß die Merkmalskombinationen der beigefügten unabhängigen Patentansprüche 1 und 17.

Vorteilhafte Ausgestaltungen der Erfindung sind in den beigefügten abhängigen Ansprüchen definiert.

Erfindungsgemäß werden in einer lagerstabilen Zusammensetzung zur Ausbildung von Beschichtungen an Bauwerken mit wenigstens einem organischen Bindemittel, wenigstens einem Füllstoff und/oder Pigment, Wasser zur Einstellung einer pastösen Konsistenz der Zusammensetzung, einem Puffersystem auf Basis Wasserglas oder auf Basis Siliconat sowie ggf. üblichen Additiven, daher ein Gehalt von 0,01 Gew.% bis 30 Gew.% wenigstens eines Erdalkalihydroxids und ein Gehalt von 0,01 Gew.% bis 10 Gew.% Lithiumcarbonat, jeweils bezogen auf das Gesamtgewicht der Zusammensetzung, zur Erhöhung und Stabilisierung des pH-Werts der Zusammensetzung verwendet.

Vorzugsweise sind diese Gehalte so bemessen, dass sie zur Einstellung und Aufrechterhaltung eines pH-Wertes von wenigstens 10 der Zusammensetzung über wenigstens 30 Tage ausreichen.

Vorzugsweise wird das Erdalkalihydroxid aus der Gruppe ausgewählt, die Kalziumhydroxid (Ca(OH)₂), Magnesiumhydroxid (Mg(OH)₂ und Bariumhydroxid (Ba(OH)₂) umfasst. Besonders bevorzugt besteht das Erdalkalihydroxid im Wesentlichen oder ganz aus Kalziumhydroxid. Wie auch in den bekannten Wasserglas-haltigen Systemen beruht die konservierende Wirkung v.a. auf der Erhöhung des pH-Werts. Erfindungsgemäß wird diese Wirkung verstärkt durch die Basenzugabe in Form von Erdalkalihydroxid. Die Erfindung kombiniert die Pufferwirkung der bekannten Wasserglas- oder Siliconat-basierenden Systeme mit einer Quelle für Hydroxid-Ionen, und erreicht damit eine vergrößerte Sicherheit, dass der pH-Wert der Zusammensetzung ausreichend hoch ist und auch über lange Zeiträume ausreichend hoch bleibt.

Das erfindungsgemäße System ergänzt ein herkömmliches, wie in der Chemie definiertes Puffersystem (Wasserglas bzw. Siliconat) mit einer schwachen Säure (Base) und dem dazu konjugierten Salz in einem bestimmten Mengenverhältnis, indem es einen Hydroxid-Speicher hinzufügt, der über einen langen Zeitraum langsam entleert wird. Diese Speicher-Entleerung wird - am Beispiel des als Erdalkalihydroxid erfindungsgemäß bevorzugten Kalziumhydroxids und des erfindungsgemäß eingesetzten Lithiumcarbonats- getrieben von der Verschiebung der Gleichgewichtslagen der einfachen Reaktionen:

Ca(OH)₂ ⇆ Ca²⁺ + 2 OH⁻

Li₂CO₃ + Ca(OH)₂ ⇆ 2 LiOH + CaCO₃ ↓

| | | |
|---|---|---|
| Löslichkeiten: | Ca(OH)₂ = 1,7 g / L | bei 20 °C |
| | CaCO₃ = 0,014 g / L | bei 20 °C |
| | Li₂CO₃ = 8,4 g / L | bei 20 °C |

Das Ca(OH)₂ ist per se zwar kein besonders gut lösliches Hydroxid. Es werden weniger Hydroxid-Ionen freigesetzt, verglichen mit anderen Basen wie Alkalihydroxide. Der pH-Wert ist jedoch ausreichend hoch zwischen 10 und 12. Im Laufe der Zeit werden die Hydroxid-Ionen jedoch durch andere (saure) Bestandteile der Beschichtungszusammensetzung (wie beispielsweise saure OH-Gruppen von Pigmenten oder Füllstoffen) neutralisiert oder auch durch das CO₂ aus der Umgebungsluft. Der pH-Wert sinkt langsam ab und fällt unter einen Wert, wo kein zuverlässiger mikrobiozider Schutz mehr besteht. Ohne den Zusatz des Lithiumcarbonats würden zu langsam Hydroxid-Ionen aus dem Ca(OH)₂ nachgeliefert.

Die Nachlieferung der Hydroxid-Ionen aus dem Ca(OH)₂ wird deshalb durch das Li₂CO₃ beschleunigt. Das Gleichgewicht der obigen Reaktionsgleichung wird nach rechts verschoben, weil schwerlösliches CaCO₃ ausfällt. Der pH-Wert wird bei einem hohen Wert stabilisiert, solange Hydroxid-Ionen aus dem Ca(OH)₂ nachgeliefert werden können, also solange dieser Speicher noch "gefüllt" ist oder besteht. Das ausgefällte CaCO₃ kann nun auch noch als Füllstoff dienen. Das Li-Hydroxid ist extrem gut löslich, so dass alle Hydroxid-Ionen nun gelöst vorliegen und der pH-Wert hoch ist.

Die eigentliche Triebkraft ist damit die Kopplung der obigen Reaktionen sowie das Verschieben der beiden Gleichgewichte auf die rechte Seite (Produktseite).

Vorteilhaft ist dabei die leichte und kostengünstige Verfügbarkeit der Reaktanden. Sowohl Kalziumhydroxid als auch Lithiumcarbonat sind preisgünstig in großen Mengen im Handel erhältlich.

Die Menge des Ca(OH)₂ gibt vor, wie viele Hydroxid-Ionen freigesetzt werden können (= Größe der "Pufferkapazität"). Über die Li-Carbonat - Menge lässt sich steuern, wie schnell dieser Puffer entleert wird. In der Regel wird deshalb gewichtsmäßig gleich viel oder etwas weniger Li-Carbonat eingesetzt als Ca(OH)₂.

Prinzipiell funktioniert dieses gekoppelte System mit allen Alkalicarbonaten und Erdalkalihydroxiden, da sie die geeigneten Löslichkeiten aufweisen. Besonders geeignet sind aber Li-Carbonat, da dem Li⁺-Ion ebenfalls eine leicht mikrobielle Wirkung zugesagt wird, und Ca-Hydroxid, da dieses in fast unbeschränkten Mengen kostengünstig verfügbar ist.

Der Gehalt an Erdalkalihydroxid in der Zusammensetzung liegt vorzugsweise zwischen 0,1 Gew.% und 15 Gew.%, mehr bevorzugt zwischen 0,2 Gew.% und 5 Gew.%.

Der Gehalt an Lithiumcarbonat in der Zusammensetzung liegt vorzugsweise zwischen 0,1 Gew.% und 8 Gew.%, mehr bevorzugt zwischen 0,2 Gew.% und 5 Gew.%.

Der Gehalt an Wasserglas in der Zusammensetzung liegt vorzugsweise zwischen 0,001 Gew.% und 10 Gew.%, mehr vorzugsweise zwischen 0,01 Gew.% und 5 Gew.%, noch mehr bevorzugt zwischen 0,1 Gew.% und 3 Gew.% (gerechnet als Feststoff). Das Wasserglas entspricht vorzugsweise dem in EP 2905268 A1 oder EP 1297079 A1 beschriebenen, wobei Kaliumwasserglas besonders bevorzugt ist.

Der Gehalt an Siliconat, bevorzugt Kaliummethylsiliconat, in der Zusammensetzung liegt vorzugsweise zwischen 0,001 Gew.% und 10 Gew.%, mehr vorzugsweise zwischen 0,01 Gew.% und 5 Gew.%, noch mehr bevorzugt zwischen 0,1 Gew.% und 3 Gew.% (gerechnet als Feststoff). Das Siliconat entspricht vorzugsweise dem in WO 2017144694 beschriebenen, wobei Kaliummethylsiliconat besonders bevorzugt ist.

Es ist vorteilhaft, wenn die Zusammensetzung das Erdalkalihydroxid und das Lithiumcarbonat in einem Gewichtsverhältnis zwischen 1:1 und 3:1, vorzugsweise zwischen 1:1 und 2:1 umfasst.

Die Zusammensetzung hat vorzugsweise einen pH-Wert von mindestens 10,5, mehr bevorzugt mindestens 11, noch mehr bevorzugt zwischen 11 und 14, besonders bevorzugt von oberhalb 11 bis zu 12, über wenigstens 30 Tage, vorzugsweise wenigstens 60 Tage, mehr bevorzugt 90 Tage, noch mehr bevorzugt 180 Tage, speziell bevorzugt 360 Tage und noch spezieller bevorzugt 720 Tage. Ein pH-Wert oberhalb von 11 gewährleistet besonders zuverlässig die Konservierung der Zusammensetzung. Ein pH-Wert von nicht mehr als 12 gewährt eine größere Sicherheit von Verätzungen bei Herstellung und Handhabung des Produktes.

Die Zusammensetzung gilt als lagerstabil im Sinne der Erfindung, wenn sich ihr pH-Wert bei Lagerung unter Normalbedingungen über wenigstens 30 Tage um nicht mehr als 1 ändert.

Die Zusammensetzung enthält weiterhin wenigstens ein organisches Bindemittel in Form eines Polymer-Bindemittel bzw. Polymerdispersion.

Der Gehalt an wenigstens einem organischen Bindemittel liegt bevorzugt zwischen 1 Gew.% und 40 Gew.%, mehr vorzugsweise zwischen 2 Gew.% und 30 Gew,%, besonders bevorzugt zwischen 2,5 Gew.% und 25 Gew.%, jeweils berechnet als Feststoff.

Das organische Bindemittel ist in bevorzugten Ausführungsformen der Erfindung ausgewählt aus der Gruppe, die Homopolymere, Copolymere oder Terpolymere von Acrylsäure und/oder Methacrylsäure, Itaconsäure sowie Säurestern wie Ethylacrylat, Butylacrylat; Styrol, substituiertes oder unsubstituiertes Vinylchlorid, Vinylacetat, Acrylamide und Acrylonitril; wasserverdünnbare Alkydpolymere, Kombinationen von (Meth)Acryl/Alkyd-polymeren, Polyvinylalkohol und deren Mischungen umfasst, wobei Homopolymere oder Copolymere von Acrylsäure und/oder Methacrylsäure bevorzugt sind.

Bevorzugt sind allgemein wässrige Polymerdispersionen, die ausreichend verseifungsstabil sind.

Die erfindungsgemäßen Zusammensetzungen enthalten Füllstoffe und/oder Pigmente. Sie haben vorzugsweise einen Gehalt an (wenigstens einem) Füllstoff und/oder Pigment zwischen 10 Gew.% und 90 Gew.%, mehr vorzugsweise zwischen 20 Gew.% und 85 Gew,%, und besonders bevorzugt zwischen 25 Gew.% und 80 Gew.%.

In bevorzugten Ausführungsformen der Erfindung ist der wenigstens eine Füllstoff bzw. das wenigstens eine Pigment ausgewählt aus der Gruppe, die pyrogen gefällte Kieselsäure, gefällte Kieselsäure, Silizium-Aluminium-Mischoxide, Erdalkalicarbonate wie Calciumcarbonat, Siliziumdioxid, Silikate, z.B. Aluminosilikate, Sulfate, z.B. Bariumsulfate, Titandioxid, Buntpigmente, z.B. Eisenoxide, Bismutvanadate oder Mischungen hiervon umfasst, wobei Titandioxid, Silikate und Carbonate besonders bevorzugt sind. Bei Pigmenten und Farbstoffen ist darauf zu achten, dass sie ausreichende Basenstabilität mitbringen.

Die erfindungsgemäßen Zusammensetzungen sind wässrig - pastös, also keine Trockenmischungen. Sie haben vorzugsweise einen Wassergehalt zwischen 5 Gew.% und 40 Gew.%., bezogen auf das Gesamtgewicht der Zusammensetzung.

In bevorzugten Ausführungsformen der Erfindung haben die Zusammensetzungen einen Gehalt an wenigstens einem Additiv wie beispielsweise einem Rheologie-Additiv, einem Entschäumer, einem Hydrophobierungsmittel, Fasern, einem Filmbildehilfsmittel und einem Dispergiermittel.

Vorzugsweise enthält eine verarbeitungsfertige erfindungsgemäße Beschichtungszusammensetzung daher:

| | | |
|---|---|---|
| 1 - 40 Gew.% | org. Bindemittel (gerechnet als Feststoff), | bvzgt. 2 - 30 Gew.%, bvzgter 2,5 - 25 Gew.% |
| 10 - 90 Gew.% | Füllstoffe / Pigmente | bvzgt. 20 - 85 Gew.%, bvzgter 25 - 80 Gew.% |
| 0,01 - 30 Gew.% | Erdalkalihydroxid | bvzgt. 0,1 - 15 Gew.%, bvzgter 0,2 - 5 Gew.% |
| 0,01 - 10 Gew.% | Lithiumcarbonat | bvzgt. 0,1 - 8 Gew.%, bvzgter 0,2 - 5 Gew.% |
| 0,001 - 10 Gew.% | Wasserglas (gerechnet als Feststoff), | bvzgt. 0,01 - 5 Gew.%, bvzgter 0,1 - 3 Gew.% (und/oder |
| 0,001 - 10 Gew.% | Siliconat (gerechnet als Feststoff), | bvzgt. 0,01 - 5 Gew.%, bvzgter 0,1 - 3 Gew.%) |
| 0,1 - 10 Gew.% | Additive | bvzgt. 0,2 - 8 Gew%, bvzgter 0,5 - 6 Gew.% |
| 5 - 40 Gew.% | Wasser | |

### Ausführungsbeispiel:

### Als Ausführungsbeispiel der Erfindung wird die Rezeptur einer erfindungsgemäßen Dispersionsfarbe wie folgt angegeben:

| | |
|---|---|
| Wasser | 28 Gew.-Teile |
| Wässrige Polymerdispersion (ca. 50 % Feststoffgehalt) | 30 Gew.-Teile |
| Füllstoffe und Pigmente | 37 Gew.-Teile |
| Additive (insb. Rheologie-Additive, Hydrophobierungsmittel, Entschäumer; Filmbildehilfsmittel, Fasern, Dispergiermittel, Konservierungsmittel, etc.) | 5 Gew.-Teile |

Der pH-Wert dieses Farbansatzes lag bei 8,3. Ohne Zusatz von Konservierungsstoffen ist die Gefahr des mikrobiellen Befalls sehr groß.

Dieser 'herkömmlichen' Dispersionsfarbe wurden 0,3 Gew.-Teile Ca(OH)₂ (in Form einer Calciumhydroxid-Suspension mit 25 Gew. % Ca(OH)₂) und 0,3 Gew.-Teile Li-Carbonat sowie 2,0 Gew.-Teile einer Kaliummethylsiliconat-Lösung (Feststoffgehalt ca. 50 %) zugegeben.

Der pH-Wert stieg auf 11,8 (unmittelbar nach Zugabe). Sieben Wochen später lag der pH-Wert noch bei 11,5. Die rheologischen Eigenschaften (Viskosität) blieben in diesem Zeitraum nahezu unverändert. Es konnte kein mikrobieller Befall festgestellt werden. Die Dispersionsfarbe erwies sich als lagerstabil.

## Patentansprüche

1. Lagerstabile Zusammensetzung zur Ausbildung von Beschichtungen an Bauwerken , umfassend wenigstens ein organisches Bindemittel, wenigstens einen Füllstoff und/oder Pigment, Wasser zur Einstellung einer pastösen Konsistenz der Zusammensetzung, ein Puffersystem auf Basis Wasserglas oder auf Basis Siliconat sowie ggf. übliche Additive,
**gekennzeichnet durch** einen Gehalt von 0,01 Gew.% bis 30 Gew.% wenigstens eines Erdalkalihydroxids und 0,01 Gew.% bis 10 Gew.% Lithiumcarbonat, jeweils bezogen auf das Gesamtgewicht der Zusammensetzung.

2. Zusammensetzung nach Anspruch 1, wobei die Gehalte so bemessen sind, dass sie zur Einstellung und Aufrechterhaltung eines pH-Wertes von wenigstens 10 der Zusammensetzung über wenigstens 30 Tage, vorzugsweise 60 Tage, mehr bevorzugt 90 Tage, noch mehr bevorzugt 180 Tage, speziell bevorzugt 360 Tage und noch spezieller bevorzugt 720 Tage ausreichen.

3. Zusammensetzung nach Anspruch 1 oder 2,
**dadurch gekennzeichnet, dass** der Gehalt an Erdalkalihydroxid zwischen 0,1 Gew.% und 15 Gew.%, vorzugsweise zwischen 0,2 Gew.% und 5 Gew.% liegt.

4. Zusammensetzung nach einem der Ansprüche 1 bis 3,
**dadurch gekennzeichnet, dass** der Gehalt an Lithiumcarbonat zwischen 0,1 Gew.% und 8 Gew.%, vorzugsweise zwischen 0,2 Gew.% und 5 Gew.% liegt.

5. Zusammensetzung nach einem der Ansprüche 1 bis 4,
**dadurch gekennzeichnet, dass** das Erdalkalihydroxid aus der Gruppe ausgewählt ist, die Kalziumhydroxid (Ca(OH)₂), Magnesiumhydroxid (Mg(OH)₂ und
Bariumhydroxid (Ba(OH)₂) umfasst, und vorzugsweise im Wesentlichen oder ganz aus Kalziumhydroxid besteht.

6. Zusammensetzung nach einem der vorstehenden Ansprüche,
**dadurch gekennzeichnet, dass** die Zusammensetzung das Erdalkalihydroxid und das Lithiumcarbonat in einem Gewichtsverhältnis zwischen 1:1 und 3:1, vorzugsweise zwischen 1:1 und 2:1 umfasst.

7. Zusammensetzung nach einem der vorstehenden Ansprüche,
**gekennzeichnet durch** einen Gehalt an Wasserglas zwischen 0,001 Gew.% und 10 Gew.%, vorzugsweise zwischen 0,01 Gew.% und 5 Gew.%, mehr bevorzugt zwischen 0,1 Gew.% und 3 Gew.% (gerechnet als Feststoff).

8. Zusammensetzung nach einem der vorstehenden Ansprüche,
**gekennzeichnet durch** einen Gehalt an Siliconat, bevorzugt Kaliummethylsiliconat, zwischen 0,001 Gew.% und 10 Gew.%, vorzugsweise zwischen 0,01 Gew.% und 5 Gew.%, mehr bevorzugt zwischen 0,1 Gew.% und 3 Gew.% (gerechnet als Feststoff).

9. Zusammensetzung nach einem der vorstehenden Ansprüche,
**gekennzeichnet durch** einen pH-Wert von mindestens 10,5, vorzugsweise mindestens 11, über wenigstens 30 Tage, vorzugsweise wenigstens 60 Tage, vorzugsweise 60 Tage, mehr bevorzugt 90 Tage, noch mehr bevorzugt 180 Tage, speziell bevorzugt 360 Tage und noch spezieller bevorzugt 720 Tage

10. Zusammensetzung nach einem der vorstehenden Ansprüche,
**gekennzeichnet durch** einen Gehalt an wenigstens einem organischen Bindemittel zwischen 1 Gew.% und 40 Gew.%, vorzugsweise zwischen 2 Gew.% und 30 Gew,%, besonders bevorzugt zwischen 2,5 Gew.% und 25 Gew.%, jeweils berechnet als Feststoff.

11. Zusammensetzung nach einem der vorstehenden Ansprüche,
**gekennzeichnet durch** einen Gehalt an wenigstens einem Füllstoff und/oder Pigment zwischen 10 Gew.% und 90 Gew.%, vorzugsweise zwischen 20 Gew.% und 85 Gew.%, besonders bevorzugt zwischen 25 Gew.% und 80 Gew.%.

12. Zusammensetzung nach einem der vorstehenden Ansprüche,
**gekennzeichnet durch** einen Wassergehalt zwischen 5 Gew.% und 40 Gew.%.

13. Zusammensetzung nach einem der vorstehenden Ansprüche,
**gekennzeichnet durch** einen Gehalt an wenigstens einem organischen Bindemittel ausgewählt aus der Gruppe, die Homopolymere, Copolymere oder Terpolymere von Acrylsäure und/oder Methacrylsäure, Itaconsäure sowie Säurestern wie Ethylacrylat, Butylacrylat; Styrol, substituiertes oder unsubstituiertes Vinylchlorid, Vinylacetat, Acrylamide und Acrylonitril; wasserverdünnbare Alkydpolymere, Kombinationen von (Meth)Acryl/Alkyd-polymeren, Polyvinylalkohol und deren Mischungen umfasst, wobei Homopolymere oder Copolymere von Acrylsäure und/oder Methacrylsäure bevorzugt sind.

14. Zusammensetzung nach einem der vorstehenden Ansprüche,
**gekennzeichnet durch** einen Gehalt an wenigstens einem Füllstoff oder Pigment, ausgewählt aus der Gruppe, die pyrogen gefällte Kieselsäure, gefällte Kieselsäure, Silizium-Aluminium-Mischoxide, Erdalkalicarbonate wie Calciumcarbonat, Siliziumdioxid, Silikate, z.B. Aluminosilikate, Sulfate, z.B. Bariumsulfate, Titandioxid, Buntpigmente, z.B. Eisenoxide, Bismutvanadate oder Mischungen hiervon umfasst wobei Titandioxid, Silikate und Carbonate bevorzugt sind.

15. Zusammensetzung nach einem der vorstehenden Ansprüche,
**gekennzeichnet durch** einen Gehalt an wenigstens einem Additiv wie beispielsweise einem Rheologie-Additiv, einem Entschäumer, einem Hydrophobierungsmittel, Fasern, einem Filmbildehilfsmittel und einem Dispergiermittel.

16. Zusammensetzung nach einem der vorstehenden Ansprüche, **dadurch**
**gekennzeichnet, dass** die Zusammensetzung ein Putz, eine Farbe, insbesondere eine Dispersionsfarbe oder eine dekorative Endbeschichtung ist.

17. Verwendung eines Gehalts von 0,01 Gew.% bis 30 Gew.% wenigstens eines Erdalkalihydroxids und eines Gehalts von 0,01 Gew.% bis 10 Gew.% wenigstens eines Alkalicarbonats, jeweils bezogen auf das Gesamtgewicht der Zusammensetzung, zur Einstellung und Aufrechterhaltung des pH-Werts einer lagerstabilen Zusammensetzung zur Ausbildung von Beschichtungen an Bauwerken, wobei die Zusammensetzung
wenigstens ein organisches Bindemittel, wenigstens einen Füllstoff und/oder Pigment, Wasser zur Einstellung einer pastösen Konsistenz der Zusammensetzung, ein Puffersystem auf Basis Wasserglas oder auf Basis Siliconat sowie ggf. übliche Additive umfasst, wobei die Gehalte so bemessen sind, dass sie zur Einstellung und Aufrechterhaltung eines pH-Wertes von wenigstens 10 der Zusammensetzung über wenigstens 30 Tage ausreichen.

18. Verwendung nach Anspruch 17, wobei die Gehalte so bemessen sind, dass sie zur Einstellung und Aufrechterhaltung eines pH-Wertes von wenigstens 10 der Zusammensetzung über wenigstens 30 Tage, vorzugsweise 60 Tage, mehr bevorzugt 90 Tage, noch mehr bevorzugt 180 Tage, speziell bevorzugt 360 Tage und noch spezieller bevorzugt 720 Tage ausreichen.

19. Verwendung nach Anspruch 17 oder 18,
**dadurch gekennzeichnet, dass** der Gehalt an Erdalkalihydroxid zwischen 0,1 Gew.% und 15 Gew.%, vorzugsweise zwischen 0,2 Gew.% und 5 Gew.% liegt.

20. Verwendung nach einem der Ansprüche 17 bis 19,
**dadurch gekennzeichnet, dass** der Gehalt an Alkalicarbonat zwischen 0,1 Gew.% und 8 Gew.%, vorzugsweise zwischen 0,2 Gew.% und 5 Gew.% liegt.

21. Verwendung nach einem der Ansprüche 17 bis 20,
**dadurch gekennzeichnet, dass** das Erdalkalihydroxid aus der Gruppe ausgewählt ist, die Kalziumhydroxid (Ca(OH)₂), Magnesiumhydroxid (Mg(OH)₂ und Bariumhydroxid (Ba(OH)₂) umfasst, und vorzugsweise im Wesentlichen oder ganz aus Kalziumhydroxid besteht.

22. Verwendung nach einem der Ansprüche 17 bis 21,
**dadurch gekennzeichnet, dass** das Alkalicarbonat aus der Gruppe ausgewählt ist, die Lithiumcarbonat (Li₂CO₃), Natriumcarbonat (Na₂CO₃) und Kaliumcarbonat (K₂CO₃) umfasst, und vorzugsweise im Wesentlichen oder ganz aus Lithiumcarbonat besteht.

23. Verwendung nach einem der Ansprüche 17 bis 22,
**dadurch gekennzeichnet, dass** die Zusammensetzung das Erdalkalihydroxid und das Alkalicarbonat in einem Gewichtsverhältnis zwischen 1:1 und 3:1, vorzugsweise zwischen 1:1 und 2:1 umfasst.

24. Verwendung nach einem der Ansprüche 17 bis 23,
**gekennzeichnet durch** einen Gehalt an Wasserglas zwischen 0,001 Gew.% und 10 Gew.%, vorzugsweise zwischen 0,01 Gew.% und 5 Gew.%, mehr bevorzugt zwischen 0,1 Gew.% und 3 Gew.% (gerechnet als Feststoff).

25. Verwendung nach einem der Ansprüche 17 bis 24,
**gekennzeichnet durch** einen Gehalt an Siliconat, bevorzugt Kaliummethylsiliconat, zwischen 0,001 Gew.% und 10 Gew.%, vorzugsweise zwischen 0,01 Gew.% und 5 Gew.%, mehr bevorzugt zwischen 0,1 Gew.% und 3 Gew.% (gerechnet als Feststoff).

26. Verwendung nach einem der Ansprüche 17 bis 25,
**gekennzeichnet durch** einen pH-Wert von mindestens 10,5, vorzugsweise mindestens 11, über wenigstens 30 Tage, vorzugsweise wenigstens 60 Tage, vorzugsweise 60 Tage, mehr bevorzugt 90 Tage, noch mehr bevorzugt 180 Tage, speziell bevorzugt 360 Tage und noch spezieller bevorzugt 720 Tage

27. Verwendung nach einem der Ansprüche 17 bis 26
**gekennzeichnet durch** einen Gehalt an wenigstens einem organischen Bindemittel zwischen 1 Gew.% und 40 Gew.%, vorzugsweise zwischen 2 Gew.% und 30 Gew,%, besonders bevorzugt zwischen 2,5 Gew.% und 25 Gew.%, jeweils berechnet als Feststoff.

28. Verwendung nach einem der Ansprüche 17 bis 27,
**gekennzeichnet durch** einen Gehalt an wenigstens einem Füllstoff und/oder Pigment zwischen 10 Gew.% und 90 Gew.%, vorzugsweise zwischen 20 Gew.% und 85 Gew.%, besonders bevorzugt zwischen 25 Gew.% und 80 Gew.%.

29. Verwendung nach einem der Ansprüche 17 bis 28,
**gekennzeichnet durch** einen Wassergehalt zwischen 5 Gew.% und 40 Gew.%.

30. Verwendung nach einem der Ansprüche 17 bis 29,
**gekennzeichnet durch** einen Gehalt an wenigstens einem organischen Bindemittel ausgewählt aus der Gruppe, die Homopolymere, Copolymere oder Terpolymere von Acrylsäure und/oder Methacrylsäure, Itaconsäure sowie Säurestern wie Ethylacrylat, Butylacrylat; Styrol, substituiertes oder unsubstituiertes Vinylchlorid, Vinylacetat, Acrylamide und Acrylonitril; wasserverdünnbare Alkydpolymere, Kombinationen von (Meth)Acryl/Alkyd-polymeren, Polyvinylalkohol und deren Mischungen umfasst, wobei Homopolymere oder Copolymere von Acrylsäure und/oder Methacrylsäure bevorzugt sind.

31. Verwendung nach einem der Ansprüche 17 bis 30,
**gekennzeichnet durch** einen Gehalt an wenigstens einem Füllstoff oder Pigment, ausgewählt aus der Gruppe, die pyrogen gefällte Kieselsäure, gefällte Kieselsäure, Silizium-Aluminium-Mischoxide, Erdalkalicarbonate wie Calciumcarbonat, Siliziumdioxid, Silikate, z.B. Aluminosilikate, Sulfate, z.B. Bariumsulfate, Titandioxid, Buntpigmente, z.B. Eisenoxide, Bismutvanadate oder Mischungen hiervon umfasst wobei Titandioxid, Silikate und Carbonate bevorzugt sind.

32. Verwendung nach einem der Ansprüche 17 bis 31
**gekennzeichnet durch** einen Gehalt an wenigstens einem Additiv wie beispielsweise einem Rheologie-Additiv, einem Entschäumer, einem Hydrophobierungsmittel, Fasern, einem Filmbildehilfsmittel und einem Dispergiermittel.

33. Verwendung nach einem der Ansprüche 17 bis 32, **dadurch gekennzeichnet, dass** die Zusammensetzung ein Putz, eine Farbe, insbesondere eine Dispersionsfarbe oder eine dekorative Endbeschichtung ist.

## Claims

1. A storage-stable composition for forming coatings on buildings, comprising at least one organic binder, at least one filler and/or pigment, water for establishing a pasty consistency of the composition, a buffer system based on water glass or based on siliconate, and optionally customary additives,
**characterised by** a content of from 0.01 wt.% to 30 wt.% of at least one alkaline earth hydroxide and 0.01 wt.% to 10 wt.% of lithium carbonate, in each case in relation to the total weight of the composition.

2. The composition according to claim 1, wherein the contents are sized such that they are sufficient to establish and maintain a pH value of at least 10 of the composition over at least 30 days, preferably 60 days, more preferably 90 days, even more preferably 180 days, especially preferably 360 days and even more especially preferably 720 days.

3. The composition according to claim 1 or 2,
**characterised in that** the content of alkaline earth hydroxide lies between 0.1 wt.% and 15 wt.%, preferably between 0.2 wt.% and 5 wt.%.

4. The composition according to any one of claims 1 to 3, **characterised in that** the content of lithium carbonate lies between 0.1 wt.% and 8 wt.%, preferably between 0.2 wt.% and 5 wt.%.

5. The composition according to any one of claims 1 to 4, **characterised in that** the alkaline earth hydroxide is selected from the group that comprises calcium hydroxide (Ca(OH)₂), magnesium hydroxide (Mg(OH)₂) and barium hydroxide (Ba(OH)₂), and preferably consists substantially or wholly of calcium hydroxide.

6. The composition according to any one of the preceding claims,
**characterised in that** the composition comprises the alkaline earth hydroxide and the lithium carbonate in a weight ratio of between 1:1 and 3:1, preferably of between 1:1 and 2:1.

7. The composition according to any one of the preceding claims,
**characterised by** a content of water glass of between 0.001 wt.% and 10 wt.%, preferably of between 0.01 wt.% and 5 wt.%, more preferably of between 0.1 wt.% and 3 wt.% (calculated as solid).

8. The composition according to any one of the preceding claims,
**characterised by** a content of siliconate, preferably potassium methyl siliconate, of between 0.001 wt.% and 10 wt.%, preferably of between 0.01 wt.% and 5 wt.%, more preferably of between 0.1 wt.% and 3 wt.% (calculated as solid).

9. The composition according to any one of the preceding claims,
**characterised by** a pH value of at least 10.5, preferably at least 11, over at least 30 days, preferably at least 60 days, preferably 60 days, more preferably 90 days, even more preferably 180 days, especially preferably 360 days and even more especially preferably 720 days.

10. The composition according to any one of the preceding claims,
**characterised by** a content of at least one organic binder of between 1 wt.% and 40 wt.%, preferably of between 2 wt.% and 30 wt.%, particularly preferably of between 2.5 wt.% and 25 wt.%, in each case calculated as solid.

11. The composition according to any one of the preceding claims,
**characterised by** a content of at least one filler and/or pigment of between 10 wt.% and 90 wt.%, preferably of between 20 wt.% and 85 wt.%, particularly preferably of between 25 wt.% and 80 wt.%.

12. The composition according to any one of the preceding claims,
**characterised by** a water content of between 5 wt.% and 40 wt.%.

13. The composition according to any one of the preceding claims,
**characterised by** a content of at least one organic binder selected from the group that comprises homopolymers, copolymers or terpolymers of acrylic acid and/or methacrylic acid, itaconic acid and also acid esters such as ethyl acrylate, butyl acrylate; styrene, substituted or unsubstituted vinyl chloride, vinyl acetate, acrylamides and acrylonitrile; water-dilutable alkyd polymers, combinations of (meth)acrylic/alkyd polymers, polyvinyl alcohol and mixtures thereof, wherein homopolymers or copolymers of acrylic acid and/or methacrylic acid are preferred.

14. The composition according to any one of the preceding claims,
**characterised by** a content of at least one filler or pigment, selected from the group that comprises pyrogenically precipitated silica, precipitated silica, silicon-aluminium mixed oxides, alkaline earth carbonates such as calcium carbonate, silicon dioxide, silicates, e.g. aluminosilicates, sulfates, e.g. barium sulfates, titanium dioxide, chromatic pigments, e.g. iron oxides, bismuth vanadates or mixtures thereof, wherein titanium dioxide, silicates and carbonates are preferred.

15. The composition according to any one of the preceding claims,
**characterised by** a content of at least one additive, such as a rheological additive, a defoamer, a hydrophobising agent, fibres, a film-forming aid, and a dispersant.

16. The composition according to any one of the preceding claims, **characterised in that** the composition is a plaster, a paint, in particular a dispersion paint, or a decorative final coating.

17. Use of a content of from 0.01 wt.% to 30 wt.% of at least one alkaline earth hydroxide and of a content of from 0.01 wt.% to 10 wt.% of at least one alkali carbonate, in each case in relation to the total weight of the composition, to establish and maintain the pH value of a storage-stable composition to form coatings on buildings,
wherein the composition
comprises at least one organic binder, at least one filler and/or pigment, water to establish a pasty consistency of the composition, a buffer system based on water glass or based on siliconate, and optionally customary additives, wherein the contents are sized such that they are sufficient to adjust and maintain a pH value of at least 10 of the composition over at least 30 days.

18. The use according to claim 17, wherein the contents are sized such that they are sufficient to establish and maintain a pH value of at least 10 of the composition over at least 30 days, preferably 60 days, more preferably 90 days, even more preferably 180 days, especially preferably 360 days and even more especially preferably 720 days.

19. The use according to claim 17 or 18,
**characterised in that** the content of alkaline earth hydroxide lies between 0.1 wt.% and 15 wt.%, preferably between 0.2 wt.% and 5 wt.%.

20. The use according to any one of claims 17 to 19,
**characterised in that** the content of alkali carbonate lies between 0.1 wt.% and 8 wt.%, preferably between 0.2 wt.% and 5 wt.%.

21. The use according to any one of claims 17 to 20,
**characterised in that** the alkaline earth hydroxide is selected from the group that comprises calcium hydroxide (Ca(OH)₂), magnesium hydroxide (Mg(OH)₂) and barium hydroxide (Ba(OH)₂), and preferably consists substantially or wholly of calcium hydroxide.

22. The use according to any one of claims 17 to 21,
**characterised in that** the alkali carbonate is selected from the group that comprises lithium carbonate (Li₂CO₃), sodium carbonate (Na₂CO₃) and potassium carbonate (K₂CO₃), and preferably consists substantially or wholly of lithium carbonate.

23. The use according to any one of claims 17 to 22,
**characterised in that** the composition comprises the alkaline earth hydroxide and the alkali carbonate in a weight ratio of between 1:1 and 3:1, preferably of between 1:1 and 2:1.

24. The use according to any one of claims 17 to 23,
**characterised by** a content of water glass of between 0.001 wt.% and 10 wt.%, preferably of between 0.01 wt.% and 5 wt.%, more preferably of between 0.1 wt.% and 3 wt.% (calculated as solid).

25. The use according to any one of claims 17 to 24,
**characterised by** a content of siliconate, preferably potassium methyl siliconate, of between 0.001 wt.% and 10 wt.%, preferably of between 0.01 wt.% and 5 wt.%, more preferably of between 0.1 wt.% and 3 wt.% (calculated as solid).

26. The use according to any one of claims 17 to 25,
**characterised by** a pH value of at least 10.5, preferably at least 11, over at least 30 days, preferably at least 60 days, preferably 60 days, more preferably 90 days, even more preferably 180 days, especially preferably 360 days and even more especially preferably 720 days.

27. The use according to any one of claims 17 to 26,
**characterised by** a content of at least one organic binder of between 1 wt.% and 40 wt.%, preferably of between 2 wt.% and 30 wt.%, particularly preferably of between 2.5 wt.% and 25 wt.%, in each case calculated as solid.

28. The use according to any one of claims 17 to 27,
**characterised by** a content of at least one filler and/or pigment of between 10 wt.% and 90 wt.%, preferably of between 20 wt.% and 85 wt.%, particularly preferably of between 25 wt.% and 80 wt.%.

29. The use according to any one of claims 17 to 28,
**characterised by** a water content of between 5 wt.% and 40 wt.%.

30. The use according to any one of claims 17 to 29,
**characterised by** a content of at least one organic binder selected from the group that comprises homopolymers, copolymers or terpolymers of acrylic acid and/or methacrylic acid, itaconic acid and also acid esters such as ethyl acrylate, butyl acrylate; styrene, substituted or unsubstituted vinyl chloride, vinyl acetate, acrylamides and acrylonitrile; water-dilutable alkyd polymers, combinations of (meth)acrylic/alkyd polymers, polyvinyl alcohol and mixtures thereof, wherein homopolymers or copolymers of acrylic acid and/or methacrylic acid are preferred.

31. The use according to any one of claims 17 to 30,
**characterised by** a content of at least one filler or pigment, selected from the group that comprises pyrogenically precipitated silica, precipitated silica, silicon-aluminium mixed oxides, alkaline earth carbonates such as calcium carbonate, silicon dioxide, silicates, e.g. aluminosilicates, sulfates, e.g. barium sulfates, titanium dioxide, chromatic pigments, e.g. iron oxides, bismuth vanadates or mixtures thereof, wherein titanium dioxide, silicates and carbonates are preferred.

32. The use according to any one of claims 17 to 31,
**characterised by** a content of at least one additive, such as a rheological additive, a defoamer, a hydrophobising agent, fibres, a film-forming aid, and a dispersant.

33. The use according to any one of claims 17 to 32, **characterised in that** the composition is a plaster, a paint, in particular a dispersion paint, or a decorative final coating.

## Revendications

1. Composition stable au stockage, destinée à créer des revêtements sur des ouvrages de construction, comprenant au moins un agent liant organique, au moins un agent de charge et / ou un pigment, de l'eau pour régler une consistance pâteuse de la composition, un système tampon à base de verre soluble ou à base de siliconate, ainsi que le cas échéant, des additifs usuels,
**caractérisée par** une teneur de 0,01 % en poids à 30 % en poids d'au moins un hydroxyde alcalino-terreux et une teneur de 0,01 % en poids à 10 % en poids de carbonate de lithium, respectivement rapportées au poids total de la composition.

2. Composition selon la revendication 1, les teneurs étant mesurées de manière à être suffisantes pour régler et maintenir une valeur pH d'au moins 10 de la composition sur au moins 30 jours, de préférence sur 60 jours, de manière plus préférentielle sur 90 jours, de manière encore plus préférentielle sur 180 jours, de manière spécialement préférentielle sur 360 jours et de manière encore plus spécialement préférentielle sur 720 jours.

3. Composition selon la revendication 1 ou 2,
**caractérisée en ce que** la teneur en hydroxyde alcalino-terreux se situe entre 0,1 % en poids et 15 % en poids, de préférence entre 0,2 % en poids et 5 % en poids.

4. Composition selon l'une quelconque des revendications 1 à 3,
**caractérisée en ce que** la teneur en carbonate de lithium se situe entre 0,1 % en poids et 8 % en poids, de préférence entre 0,2 % en poids et 5 % en poids.

5. Composition selon l'une quelconque des revendications 1 à 4,
**caractérisée en ce que** l'hydroxyde alcalino-terreux est sélectionné dans le groupe qui comprend l'hydroxyde de calcium (Ca(OH)₂), l'hydroxyde de magnésium (Mg(OH)₂) et l'hydroxyde de baryum (Ba(OH)₂) et est constitué de préférence sensiblement ou totalement d'hydroxyde de calcium.

6. Composition selon l'une quelconque des revendications précédentes,
**caractérisée en ce que** la composition comprend l'hydroxyde alcalino-terreux et le carbonate de lithium dans un rapport pondéral compris entre 1 : 1 et 3 : 1, de préférence compris entre 1 : 1 et 2 : 1.

7. Composition selon l'une quelconque des revendications précédentes,
**caractérisée par** une teneur en verre soluble comprise entre 0,001 % en poids et 10 % en poids, de préférence comprise entre 0,01 % en poids et 5 % en poids, de manière plus préférentielle, comprise entre 0,1 % en poids et 3 % en poids (calculée en tant que matière solide) .

8. Composition selon l'une quelconque des revendications précédentes,
**caractérisée par** une teneur en siliconate, de manière préférentielle en méthylsiliconate de potassium comprise entre 0,001 % en poids et 10 % en poids, de préférence comprise entre 0,01 % en poids et 5 % en poids, de manière plus préférentielle, comprise entre 0,1 % en poids et 3 % en poids (calculée en tant que matière solide).

9. Composition selon l'une quelconque des revendications précédentes, **caractérisée par** une valeur pH d'au moins 10,5, de préférence d'au moins 11 sur au moins 30 jours, de préférence sur au moins 60 jours, de préférence sur 60 jours, de manière plus préférentielle sur 90 jours, de manière encore plus préférentielle sur 180 jours, de manière spécialement préférentielle sur 360 jours et de manière encore plus spécialement préférentielle sur 720 jours.

10. Composition selon l'une quelconque des revendications précédentes,
**caractérisée par** une teneur en au moins un agent liant organique comprise entre 1 % en poids et 40 % en poids, de préférence comprise entre 2 % en poids et 30 % en poids, de manière notamment préférentielle, comprise entre 2,5 % en poids et 25 % en poids, respectivement calculée en tant que matière solide.

11. Composition selon l'une quelconque des revendications précédentes,
**caractérisée par** une teneur en au moins un agent de charge et / ou un pigment comprise entre 10 % en poids et 90 % en poids, de préférence comprise entre 20 % en poids et 85 % en poids, de manière particulièrement préférentielle, comprise entre 25 % en poids et 80 % en poids.

12. Composition selon l'une quelconque des revendications précédentes,
**caractérisée par** une teneur en eau comprise entre 5 % en poids et 40 % en poids.

13. Composition selon l'une quelconque des revendications précédentes,
**caractérisée par** une teneur en au moins un agent liant organique, sélectionné dans le groupe qui comprend les homopolymères, les copolymères ou les terpolymères de l'acide acrylique et / ou l'acide méthacrylique, l'acide itaconique, ainsi que des esters d'acides, tels que l'acrylate d'éthyle, l'acrylate de butyle ; le styrène, le chlorure de vinyle substitué ou non substitué, l'acétate de vinyle, des acrylamides et l'acrylonitrile ; des polymères d'alkyde diluables dans l'eau, des associations de polymères (meth)acryliques/alkyde, l'alcool polyvinylique et leurs mélanges, les homopolymères ou copolymères de l'acide acrylique et / ou de l'acide méthacrylique étant préférentiels.

14. Composition selon l'une quelconque des revendications précédentes,
**caractérisée par** une teneur en au moins un agent de charge ou un pigment, sélectionné dans le groupe qui comprend l'acide silicique précipité par pyrogénation, l'acide silicique, précipité, les oxydes mixtes de silicium-aluminium, les carbonates alcalino-terreux, tels que le carbonate de calcium, l'oxyde de silicium, les silicates, par exemple les aluminosilicates, les sulfates, par exemple les sulfates de baryum, le dioxyde de titane, les pigments colorés, par exemple les oxydes de fer, les vanadates de bismuth ou leurs mélanges, le dioxyde de titane, les silicates et les carbonates étant préférentiels.

15. Composition selon l'une quelconque des revendications précédentes,
**caractérisée par** une teneur en au moins un additif, tel que par exemple un additif rhéologique, un agent antimousse, un agent conférant le caractère hydrophobe, des fibres, un agent auxiliaire filmogène et un agent dispersant.

16. Composition selon l'une quelconque des revendications précédentes, **caractérisée en ce que** la composition est un enduit, une peinture, notamment une peinture à dispersion ou un revêtement de finition décoratif.

17. Utilisation d'une teneur de 0,01 % en poids à 30 % en poids d'au moins un hydroxyde alcalino-terreux et d'une teneur de 0,01 % en poids à 10 % en poids d'au moins un carbonate alcalin, respectivement rapportées au poids total de la composition, pour régler pour et maintenir la valeur pH d'une composition stable au stockage, destinée à créer des revêtements sur des ouvrages de construction, la composition comprenant au moins un agent liant organique, au moins un agent de charge et / ou un pigment, de l'eau pour régler une consistance pâteuse de la composition, un système tampon à base de verre soluble ou à base de siliconate, ainsi que le cas échéant des additifs usuels, les teneurs étant mesurées de manière à être suffisantes pour régler et maintenir une valeur pH d'au moins 10 de la composition sur au moins 30 jours.

18. Utilisation selon la revendication 17, les teneurs étant mesurées de manière à être suffisantes pour régler et maintenir une valeur pH d'au moins 10 de la composition sur au moins 30 jours, de préférence sur 60 jours, de manière plus préférentielle sur 90 jours, de manière encore plus préférentielle sur 180 jours, de manière spécialement préférentielle sur 360 jours et de manière encore plus spécialement préférentielle sur 720 jours.

19. Utilisation selon la revendication 17 ou 18,
**caractérisée en ce que** la teneur en hydroxyde alcalino-terreux se situe entre 0,1 % en poids et 15 % en poids, de préférence entre 0,2 % en poids et 5 % en poids.

20. Utilisation selon l'une quelconque des revendications 17 à 19,
**caractérisée en ce que** la teneur en carbonate alcalin se situe entre 0,1 % en poids et 8 % en poids, de préférence entre 0,2 % en poids et 5 % en poids.

21. Utilisation selon l'une quelconque des revendications 17 à 20,
**caractérisée en ce que** l'hydroxyde alcalino-terreux est sélectionné dans le groupe qui comprend l'hydroxyde de calcium (Ca(OH)₂), l'hydroxyde de magnésium (Mg(OH)₂) et l'hydroxyde de baryum (Ba(OH)₂) et est constitué de préférence sensiblement ou totalement d'hydroxyde de calcium.

22. Utilisation selon l'une quelconque des revendications 17 à 21,
**caractérisée en ce que** le carbonate alcalin est sélectionné dans le groupe qui comprend le carbonate de lithium (Li₂CO₃), le carbonate de sodium (Na₂CO₃) et le carbonate de potassium (K₂CO₃) et est constitué de préférence sensiblement ou totalement en carbonate de lithium.

23. Utilisation selon l'une quelconque des revendications 17 à 22,
**caractérisée en ce que** la composition comprend l'hydroxyde alcalino-terreux et le carbonate alcalin dans un rapport pondéral compris entre 1 : 1 et 3 : 1, de préférence compris entre 1 : 1 et 2 : 1.

24. Utilisation selon l'une quelconque des revendications 17 à 23,
**caractérisée par** une teneur en verre soluble comprise entre 0,001 % en poids et 10 % en poids, de préférence comprise entre 0,01 % en poids et 5 % en poids, de manière plus préférentielle comprise entre 0,1 % en poids et 3 % en poids (calculée en tant que matière solide) .

25. Utilisation selon l'une quelconque des revendications 17 à 24,
**caractérisée par** une teneur en siliconate, de manière préférentielle en méthylsiliconate de potassium comprise entre 0,001 % en poids et 10 % en poids, de préférence comprise entre 0,01 % en poids et 5 % en poids, de manière plus préférentielle comprise entre 0,1 % en poids et 3 % en poids (calculée en tant que matière solide).

26. Utilisation selon l'une quelconque des revendications 17 à 25,
**caractérisée par** une valeur pH d'au moins 10,5, de préférence d'au moins 11 sur au moins 30 jours, de préférence sur au moins 60 jours, de préférence sur 60 jours, de manière plus préférentielle sur 90 jours, de manière encore plus préférentielle sur 180 jours, de manière spécialement préférentielle sur 360 jours et de manière encore plus spécialement préférentielle sur 720 jours.

27. Utilisation selon l'une quelconque des revendications 17 à 26,
**caractérisée par** une teneur en au moins un agent liant organique comprise entre 1 % en poids et 40 % en poids, de préférence comprise entre 2 % en poids et 30 % en poids, de manière particulièrement préférentielle comprise entre 2,5 % en poids et 25 % en poids, respectivement calculée en tant que matière solide.

28. Utilisation selon l'une quelconque des revendications 17 à 27,
**caractérisée par** une teneur en au moins un agent de charge et / ou un pigment comprise entre 10 % en poids et 90 % en poids, de préférence comprise entre 20 % en poids et 85 % en poids, de manière particulièrement préférentielle comprise entre 25 % en poids et 80 % en poids.

29. Utilisation selon l'une quelconque des revendications 17 à 28,
**caractérisée par** une teneur en eau comprise entre 5 % en poids et 40 % en poids.

30. Utilisation selon l'une quelconque des revendications 17 à 29,
**caractérisée par** une teneur en au moins un agent liant organique, sélectionné dans le groupe qui comprend les homopolymères, les copolymères ou les terpolymères de l'acide acrylique et / ou l'acide méthacrylique, l'acide itaconique, ainsi que des esters d'acides, tels que l'acrylate d'éthyle, l'acrylate de butyle ; le styrène, le chlorure de vinyle substitué ou non substitué, l'acétate de vinyle, acrylamides et l'acrylonitrile ; des polymères d'alkyde diluables dans l'eau, des associations de polymères (meth)acryliques/alkyde, l'alcool polyvinylique et leurs mélanges, les homopolymères ou copolymères de l'acide acrylique et / ou l'acide méthacrylique étant préférentiels.

31. Utilisation selon l'une quelconque des revendications 17 à 30,
**caractérisée par** une teneur en au moins un agent de charge ou un pigment, sélectionné dans le groupe qui comprend l'acide silicique précipité par pyrogénation, l'acide silicique, précipité, les oxydes mixtes de silicium-aluminium, les carbonates alcalino-terreux, tels que le carbonate de calcium, l'oxyde de silicium, les silicates, par exemple les aluminosilicates, les sulfates, par exemple les sulfates de baryum, le dioxyde de titane, les pigments colorés, par exemple les oxydes de fer, les vanadates de bismuth ou leurs mélanges, le dioxyde de titane, les silicates et les carbonates étant préférentiels.

32. Utilisation selon l'une quelconque des revendications 17 à 31,
**caractérisée par** une teneur en au moins un additif, tel que par exemple un additif rhéologique, un agent antimousse, un agent conférant le caractère hydrophobe, des fibres, un agent auxiliaire filmogène et un agent dispersant.

33. Utilisation selon l'une quelconque des revendications 17 à 32, **caractérisée en ce que** la composition est un enduit, une peinture, notamment une peinture à dispersion ou un revêtement de finition décoratif.
